# EUROPEAN PATENT APPLICATION

(11) **EP 3 678 207 A1**
(43) Date of publication of application: **08.07.2020**
(21) Application number: 18852147.0
(22) Date of filing: 11.06.2018
(51) Int. Cl.: H01M 2/02, B32B 27/00, H01M 2/08, H01M 10/04

(54) **SHEET MATERIAL, SECONDARY BATTERY AND METHOD FOR PRODUCING SECONDARY BATTERY**

(30) Priority: 29.08.2017 JP 2017164569
(71) Applicant: Sekisui Chemical Co., Ltd., Osaka-shi, Osaka 530-8565 (JP)
(72) Inventor: OGAWA Hiroshi, Tsukuba-shi Ibaraki 300-4292 (JP)
(74) Representative: Müller-Boré & Partner Patentanwälte PartG mbB
(86) International application number: PCT/JP2018/022237
(87) International publication number: WO 2019/044110

(57) **Abstract**

Provided are a sheet material capable of preventing formation of a resin ball inside the housing with a simple configuration, a secondary battery having a housing less likely to decrease the mechanical strength, and a method of producing such a secondary battery. A sheet material 80 is used to prepare a housing 8 configured to enclose an electrode laminate 10 inside, the electrode laminate 10 including a cathode, an anode, and a separator. The sheet material 80 has a first area 821 constituted by a resin material and configured to be welded during preparation of the housing 8 and a second area 822 located inside of the first area 821 in a plan view of the sheet material 80 and configured to block the resin material melt during the preparation of the housing 8 from flowing inside the housing 8.

## Description

### Technical Field

The present invention relates to a sheet material, a secondary battery, and a method of producing a secondary battery.

### Background Art

These days, lithium ion secondary batteries are actively developed. Such a lithium ion secondary battery generally has a cathode, an anode, and an electrolyte and they are enclosed in a housing. For reduction in weight of the lithium ion secondary battery, the housing is sometimes configured with a laminated sheet where, for example, a resin layer is laminated on an aluminum layer.

Such a housing is prepared by heat sealing the periphery of a sheet material. At this point, depending on the pressing force of a heating bar, a resin material in a molten state in the pressed area of the resin layer sometimes flows out to form a resin ball (lump of resin) near a sealed portion inside the housing. Such a resin ball is brittle, and when gas is generated in the housing to pull the sheet material, cracks are sometimes developed at the boundary with the resin ball of the resin layer.

When the cracks thus developed reach the aluminum layer, the aluminum layer is sometimes alloyed with lithium to form a hole in the aluminum layer. In this case, the mechanical strength of the sheet material decreases and the housing may be easily broken due to the pressure of the gas generated in the housing.

To prevent formation of such a resin ball in the housing, it is proposed to form a recess (reception portion) to receive the resin material in a molten state in the sheet material (e.g., refer to PTL 1). However, the sheet material described in PTL 1 is configured to form the recess and thus has a complex configuration.

### Citation List

### Patent Literature

PTL 1: JP 2001-229889 A

### Summary of Invention

### Technical Problem

The present invention has been made to solve the above problems and it is an object thereof to provide a sheet material capable of preventing formation of a resin ball inside a housing with a simple configuration, a secondary battery having a housing less likely to decrease the mechanical strength, and a method of producing such a secondary battery.

### Solution to Problem

Such an object is achieved by the following present invention.
[1] A sheet material for preparing a housing to enclose an electrode laminate inside, the electrode laminate including a cathode, an anode, and a separator, the sheet material includes:
   a first area constituted by a resin material and configured to be welded during preparation of the housing; and
   a second area located inside of the first area in a plan view of the sheet material and configured to block the resin material melt during preparation of the housing from flowing inside the housing.
[2] In the sheet material of the present invention, it is preferred that the second area is constituted by a resin material having a melt flow rate less than that of the resin material for the first area.
[3] In the sheet material of the present invention, it is preferred that, when the resin material constituting the first area has a melt flow rate at a temperature of 200°C under a load of 98 N of F1 [g/10 min] and the resin material constituting the second area has a melt flow rate at a temperature of 200°C under a load of 98 N of F2 [g/10 min], F1/F2 is from 1.5 to 3.5.
[4] In the sheet material of the present invention, it is preferred that the second area is constituted by a resin material having a density greater than that of the resin material for the first area.
[5] In the sheet material of the present invention, it is preferred that, when the resin material constituting the first area has a density of D1 [g/cm³] and the resin material constituting the second area has a density of D2 [g/cm³], D2 - D1 is 0.015 or less.
[6] In the sheet material of the present invention, it is preferred that the second area is constituted by a resin material having a melting point higher than that of the resin material for the first area.
[7] In the sheet material of the present invention, it is preferred that, when the resin material constituting the first area has a melting point of M1 [°C] and the resin material constituting the second area has a melting point of M2, M1 - M2 is from 10 to 30.
[8] In the sheet material of the present invention, it is preferred that the sheet material has a substrate layer and a surface layer provided on one side of the substrate layer, and
   both the first area and the second area are provided in the surface layer.
[9] In the sheet material of the present invention, it is preferred that, in a plan view of the sheet material, the first area is in a strip shape having a first width and the second area is in a strip shape having a second width less than the first width.
[10] In the sheet material of the present invention, it is preferred that, when the first width is L1 [mm] and the second width is L2 [mm], L2/L1 is from 0.1 to 0.8.
[11] In the sheet material of the present invention, it is preferred that the sheet material has a substrate layer and a surface layer provided on one side of the substrate layer, and
   the first area is provided in the surface layer and the second area is provided on the surface layer.
[12] In the sheet material of the present invention, it is preferred that the entire surface layer is formed from the resin material constituting the first area.
[13] In the sheet material of the present invention, it is preferred that the second area contains a plurality of particles.
[14] A secondary battery includes:
   an electrode laminate including a cathode, an anode, and a separator;
   an electrolyte; and
   a housing configured by welding the first area of the above sheet material and configured to enclose the electrode laminate and the electrolyte inside.
[15] A method of producing a secondary battery, includes the steps of:
   preparing the above sheet material and an electrode laminate including a cathode, an anode, and a separator;
   preparing a housing including an opening by folding the prepared sheet material with a surface on a side of the first area and the second area inside or overlapping another sheet material on the surface of the prepared sheet material, followed by welding a portion of the first area of the prepared sheet material;
   via the opening, storing the electrode laminate in the housing and filling the housing with an electrolyte; and
   sealing the opening of the housing by welding the remaining portion of the first area of the prepared sheet material, wherein
   the resin material melt during the welding of the first area is blocked from flowing inside the housing by the presence of the second area.

### Advantageous Effects of Invention

According to the present invention, it is possible to prevent formation of a resin ball inside the housing by the presence of the second area.

### Brief Description of the Drawings

Fig. 1 is a perspective view schematically illustrating a lithium ion secondary battery in a first embodiment.
Fig. 2 is a cross-sectional view taken along line A-A in Fig. 1.
Fig. 3 is a plan view schematically illustrating the lithium ion secondary battery illustrated in Fig. 1.
Fig. 4 is a cross-sectional view illustrating the step of preparing a housing of the lithium ion secondary battery illustrated in Fig. 1.
Fig. 5 is a plan view schematically illustrating a lithium ion secondary battery in a second embodiment.
Fig. 6 is a cross-sectional view taken along line B-B in Fig. 5.
Fig. 7 is a cross-sectional view illustrating the step of preparing a housing of the lithium ion secondary battery illustrated in Fig. 5.
Fig. 8 is a cross-sectional view illustrating another configuration example of a sealed portion.

### Description of Embodiments

A sheet material, a secondary battery, and a method of producing a secondary battery of the present invention are described below in detail based on preferred embodiments illustrated in the attached drawings.

It should be noted that the following embodiments are described for the case of applying the secondary battery of the present invention to a lithium ion secondary battery.

### First Embodiment

The first embodiment of the lithium ion secondary battery is first described.

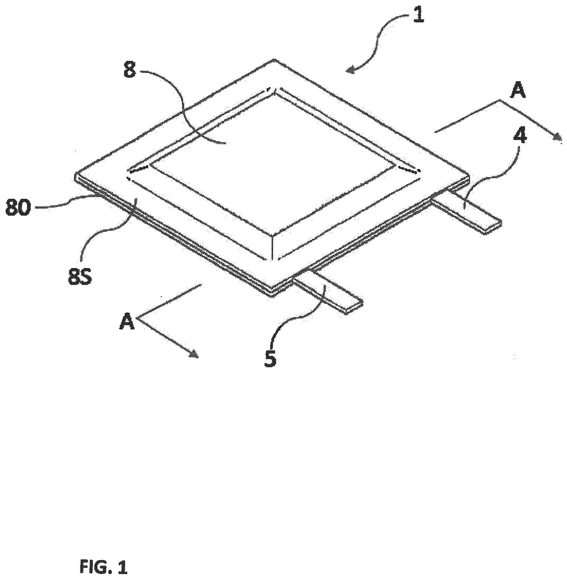

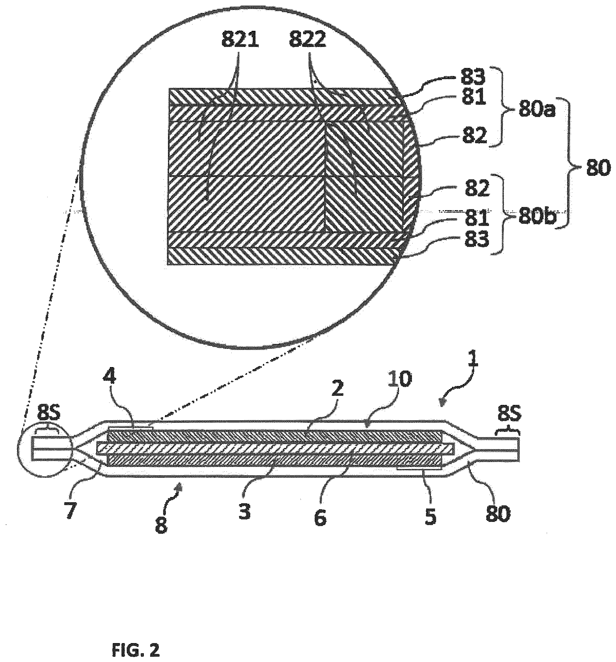

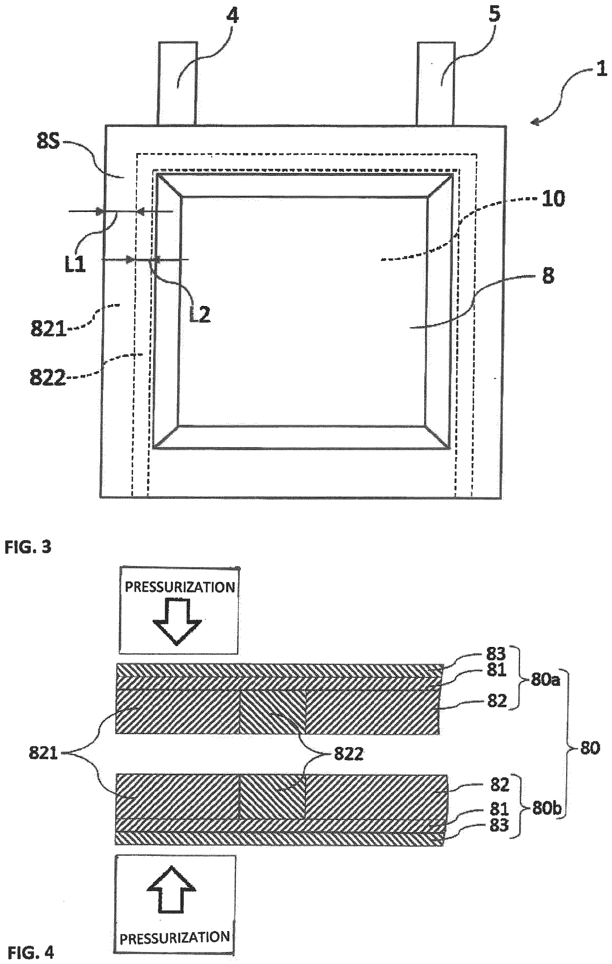

Fig. 1 is a perspective view schematically illustrating a lithium ion secondary battery in the first embodiment, Fig. 2 is a cross-sectional view taken along line A-A in Fig. 1, Fig. 3 is a plan view schematically illustrating the lithium ion secondary battery illustrated in Fig. 1, and Fig. 4 is a cross-sectional view illustrating the step of preparing a housing of the lithium ion secondary battery illustrated in Fig. 1.

For the convenience of facilitating understanding of the characteristics, the drawings sometimes illustrate characteristic areas in an enlarged view and thus the dimensional proportions and the like of the respective components may be different from actual cases. In addition, the materials, the dimensions, and the like given as exemplification are merely examples, and the present invention is not limited to them and may be appropriately modified without departing from the spirit.

As illustrated in Figs. 1 and 2, a lithium ion secondary battery 1 includes an electrode laminate 10 provided with a cathode 2, an anode 3, and a separator 6 inserted between them, an electrolyte solution 7, and a sheet housing 8 configured to enclose the electrode laminate 10 and the electrolyte solution 7 inside.

The electrode laminate 10 further includes a terminal tab 4 joined to the cathode 2 and a terminal tab 5 joined to the anode 3, and the terminal tabs 4 and 5 project from the housing 8 while the electrode laminate 10 is enclosed in the housing 8.

In the present embodiment, the terminal tab 4 joined to the cathode 2 and the terminal tab 5 joined to the anode 3 project from the same end of the electrode laminate 10, that is, the same end of the lithium ion secondary battery 1 in the same direction.

The cathode 2 has, although not shown, a cathode collector constituted by aluminum foil in a substantially rectangular shape in a plan view and cathode active material layers respectively provided on both surfaces of the cathode collector. While the lithium ion secondary battery 1 is charged, the cathode collector collects and supplies power to the cathode active material layers.

The cathode collector is partially exposed from the cathode active material layers, and the terminal tab 4 is joined to the exposed portion. The terminal tab 4 may be constituted by, for example, an aluminum plate or the like.

The cathode active material layers may be formed by, for example, applying a cathode slurry containing a cathode active material, a conductive auxiliary, and a binder on the cathode collector.

Examples of the cathode active material include, but not particularly limited to, lithium metal oxide compounds represented by a general formula "LiMₓO_{y} (in the formula, M denotes a metal atom and x and y denote composition ratios of the metal atoms M and the oxygen atoms O)", and a single one of them or two or more in combination may be used.

Specific examples of such a lithium metal oxide compound include lithium cobalt oxide (LiCoO₂), lithium nickel oxide (LiNiO₂), lithium manganese oxide (LiMn₂O₄), and the like.

In the general formula, M may be constituted by multiple types of metal atoms. In this case, the lithium metal oxide compound is represented by, for example, a general formula "LiM¹ₚM²_{q}M³ᵣO_{y} (in the formula, M¹, M², and M³ denote metal atoms of types different from each other, p, q, r, and y denote composition ratios of the metal atoms M¹, M², and M³ and the oxygen atoms O)". In addition, p + q + r = x. Specific examples of such a lithium metal oxide compound include LiNi_{0.33}Mn_{0.33}Co_{0.33}O₂ and the like.

As the cathode active material, it is also possible to use olivine-type lithium iron phosphate (LiFePO₄) of similar composition.

Examples of the conductive auxiliary to be used include acetylene black and the like, and examples of the binder to be used include polyvinylidene fluoride and the like.

Meanwhile, the anode 3 has, although not shown, an anode collector constituted by copper foil in a substantially rectangular shape in a plan view and anode active material layers respectively provided on both surfaces of the anode collector. While the lithium ion secondary battery 1 is discharged, the anode collector efficiently extracts and supplies electrons generated by the anode active material layers to external devices.

The anode collector is partially exposed from the anode active material layers, and the terminal tab 5 is joined to the exposed portion. The terminal tab 5 may be constituted by, for example, a nickel-plated aluminum plate or the like.

The anode active material layers may be formed by, for example, applying an anode slurry containing an anode active material, a binder, and a conductive auxiliary, as needed, on the anode collector.

Examples of the anode active material to be used include, but not particularly limited to, carbon materials such as carbon powder and graphite powder, metal oxides such as lithium titanate, and the like.

Examples of the binder to be used include polyvinylidene fluoride and the like, and examples of the conductive auxiliary to be used include acetylene black, carbon nanotubes, and the like.

While each collector has a square shape in a plan view in the illustrated configuration, the shape may be, for example, a rectangular shape, a circular shape, an elliptical shape, or the like.

Each collector has an area in a plan view (planar area) appropriately set in accordance with the size of the lithium ion secondary battery 1 to be produced and the area is preferably, but not particularly limited to, from 500 to 2500 mm² approximately and more preferably from 750 to 2000 mm² approximately.

Each collector has a thickness preferably, but not particularly limited to, from 1 to 75 µm approximately and more preferably from 5 to 50 µm.

Each electrode active material is preferably particulate. In this case, the electrode active material preferably has an average particle diameter from 1 to 30 µm approximately.

Each active material layer preferably has a thickness, but not particularly limited to, from 5 to 100 µm approximately and more preferably from 10 to 75 µm approximately.

Between the cathode 2 and the anode 3, the separator 6 is inserted. The separator 6 has insulating properties and has a function of preventing short circuiting of the cathode 2 and the anode 3 and a function of maintaining the electrolyte solution 7.

The separator 6 is not particularly limited as long as it allows the electrolyte solution 7 to be maintained or to pass, and the separator 6 may be constituted by a porous film (aggregated particles), a nonwoven fabric, or the like.

Examples of the material (insulating material) constituting the separator 6 include olefinic resins, such as polyethylene and polypropylene, cellulosic resins, and the like.

The separator 6 preferably has a thickness from 1 to 75 µm approximately and more preferably from 1 to 50 µm approximately. The separator 6 having such a thickness is capable of sufficiently securing the insulating properties.

The electrode laminate 10 as described above is, together with the electrolyte solution 7, enclosed in the housing 8.

The electrolyte solution 7 is a liquid in which an electrolyte is dissolved in a solvent. While the lithium ion secondary battery 1 is discharged, ions are conducted in the electrolyte solution 7.

As the solvent, a nonaqueous solvent substantially not containing water (e.g., less than 100 ppm) is preferably used. Examples of the nonaqueous solvent include propylene carbonate, ethylene carbonate, diethyl carbonate, dimethyl carbonate, methyl ethyl carbonate, dimethoxyethane, γ-butyrolactone, methyl acetate, methyl formate, toluene, hexane, and the like, and a single one of them or two or more in combination may be used.

As the electrolyte, a lithium salt, such as lithium hexafluorophosphate, lithium perchlorate, and lithium tetrafluoroborate, for example, or the like may be preferably used.

The concentration of the electrolyte in the electrolyte solution 7 is preferably, but not particularly limited to, from 0.01 to 1 M approximately, more preferably from 0.05 to 0.75 M approximately, and even more preferably from 0.1 to 0.5 M approximately.

The electrolyte solution 7 may be gelatinous by adding a gelling agent. Examples of the gelling agent include nitrile-based compounds such as acetonitrile, ether-based compounds such as tetrahydrofuran, amide-based compounds such as dimethylformamide, and the like, and a single one of them or two or more in combination may be used.

As illustrated in Fig. 1, the housing 8 is configured by folding one flexible sheet material 80 and sealing the periphery.

As illustrated in Fig. 2, the sheet material 80 in the present embodiment is configured with a laminated sheet including a substrate layer 81, a resin layer (surface layer) 82 provided on one side of the substrate layer 81, and a protective layer 83 provided on the other side (surface on the opposite side of the resin layer 82) of the substrate layer 81.

The substrate layer 81 has a function of giving strength to the sheet material 80 and a function of blocking penetration of the electrolyte solution 7 and gas. Examples of the material constituting the substrate layer 81 include aluminum, aluminum alloy, stainless steel, and the like.

The substrate layer 81 preferably has a thickness, but not particularly limited to, from 9 to 60 µm approximately and more preferably from 20 to 50 µm approximately.

The resin layer 82 has a function of sealing the housing 8 by being welded. Examples of the material constituting the resin layer 82 (weldable material) include polyethylene, polypropylene, ethylene-vinyl acetate copolymers, ionomers, polyethylene terephthalate, polybutylene terephthalate, polyvinyl chloride, polyvinylidene chloride, polyvinyl alcohol, ethylene-vinyl alcohol copolymers, polystyrene, polyacrylonitrile, ethylene-(meth)acrylic acid copolymers, polymethylpentene, and the like, and a single one of them or two or more in combination may be used.

The resin layer 82 is preferably constituted by a non-oriented film formed from the above material, and in particular, a first area 821 described later is preferably constituted by a non-oriented polypropylene film. This allows suitable prevention of dissolution or swelling of a sealed portion 8S by the electrolyte solution 7.

The resin layer 82 preferably has a thickness, but not particularly limited to, from 3 to 200 µm approximately and more preferably from 3 to 80 µm approximately.

The protective layer 83 configures an outermost layer of the housing 8 and has a function of protecting the substrate layer 81 and a function of securing mechanical structural properties of the lithium ion secondary battery 1. As the material constituting the protective layer 83, a relatively hard resin material is used. Examples of such a hard resin material include polyamide-based resins (nylon), acrylic resins, polycarbonate, polyester-based resins (polyethylene terephthalate), and the like, and a single one of them or two or more in combination may be used.

The protective layer 83 preferably has a thickness, but not particularly limited to, from 5 to 50 µm approximately and more preferably from 10 to 30 µm approximately.

The resin layer 82 in the present embodiment has a first area 821 to be a sealed portion 8S by being welded during preparation of the housing 8 and a second area 822 located inside of the first area 821 in a plan view of the sheet material 80.

The second area 822 functions to block the resin material of the first area 821 that is melt during preparation of the housing 8 from flowing inside the housing 8. This allows prevention of formation of a resin ball inside the housing 8 and production of the housing 8 less likely to decrease the mechanical strength.

Such a function (inflow blocking function) may be appropriately given to the second area 822 by at least one method of, for example, I) constituting the second area 822 by a resin material having a melt flow rate less than that of the resin material constituting the first area 821, II) constituting the second area 822 by a resin material having a density greater than that of the resin material constituting the first area 821, III) constituting the second area 822 by a resin material having a melting point higher than that of the resin material constituting the first area 821, and the like.

According to such a method, even when the resin material constituting the first area 821 (hereinafter, may be referred to as a "first resin material") is in a molten state, the resin material constituting the second area 822 (hereinafter, may be referred to as a "second resin material") does not reach a molten state, or even when reaches a molten state, has a fluidity lower than that of the first resin material. It is thus possible to reliably give the inflow blocking function to the second area 822. In addition, it is possible to achieve such a function without causing the configuration of the sheet material 80 to be complex, that is, with a relatively simple configuration.

In the case of I, when the first resin material has a melt flow rate at a temperature of 200°C under a load of 98 N of F1 [g/10 min] and the second resin material has a melt flow rate at a temperature of 200°C under a load of 98 N of F2 [g/10 min], F1/F2 is preferably from 1.5 to 3.5 approximately and more preferably from 2 to 3 approximately. F1/F2 in the above range allows further improvement in the inflow blocking function of the second area 822.

The melt flow rate F1 at a temperature of 200°C under a load of 98 N of the first resin material is preferably from 0.05 to 5.0 g/10 min approximately and more preferably from 0.1 to 3.0 g/10 min. Meanwhile, the melt flow rate F2 at a temperature of 200°C under a load of 98 N of the second resin material is preferably from 0.03 to 3.3 g/10 min approximately and more preferably from 0.06 to 1.9 g/10 min approximately.

The melt flow rate (MFR) is a value measured in accordance with the measurement method defined in JIS K 7120 using a plastometer defined in JIS K 6760.

In the case of II, when the first resin material has a density of D1 [g/cm³] and the second resin material has a density of D2 [g/cm³], D2 - D1 is preferably 0.015 or less and more preferably from 0.005 to 0.015 approximately. D2 - D1 in the above range allows further improvement in the inflow blocking function of the second area 822.

The density D1 of the first resin material and the density D2 of the second resin material are appropriately selected from a range from 0.900 to 0.965 g/cm³ approximately (preferably from 0.918 to 0.950 g/cm³ approximately).

In the case of III, when the first resin material has a melting point of M1 [°C] and the second resin material has a melting point of M2, M1 - M2 is preferably from 10 to 30 approximately and more preferably from 15 to 25 approximately. M1 - M2 in the above range allows further improvement in the inflow blocking function of the second area 822.

To satisfy the conditions described above, the first resin material and the second resin material are appropriately selected from the respective weldable materials. It should be noted that the second resin material may be selected from resin materials other than the above weldable materials (e.g., fluorine-based resins, etc.).

In addition, the sheet material 80 in the present embodiment includes the first area 821 in a strip shape over the entire periphery and the second area 822 in a strip shape inside the first area 821 and along the first area 821.

The housing 8 is then prepared by folding the one sheet material 80 as described above and welding (e.g., heat welding, ultrasonic welding, high frequency welding) an upper portion 80a and a lower portion 80b, arranged in a facing manner, in the first area 821.

As illustrated in Fig. 3, the upper portion 80a and the lower portion 80b are welded at the respective left ends, right ends, and upper ends in a plan view. The sealed portion 8S is thus formed along the three sides of the housing 8.

It should be noted that the upper portion 80a and the lower portion 80b may be welded at the respective lower ends as well, as needed, to form the sealed portion 8S.

In addition, the second area 822 may be welded or unwelded. Even when being welded, the second area 822 has the relationship as described earlier with the first area 821 and thus forms a weakly sealed portion of adhesion strength lower than that in the first area 821 (sealed portion 8S).

In this situation, when the lithium ion secondary battery 1 generates excessive heat due to repeated charging and discharging or thermal runaway, gas is generated in the housing 8 and the internal pressure increases to cause swelling of the housing 8. If the battery cannot withstand the internal pressure, it may finally forcibly ruptures (explodes). One of the reasons for this phenomenon is that the internal capacity of the housing 8 is fixed and cannot vary.

To cope with this phenomenon, formation of the weakly sealed portion in the second area 822 allows the weakly sealed portion to be broken, when the internal pressure of the housing 8 increases, and the internal volume of the housing 8 increases to allow absorption of the increased internal pressure. It is thus possible to reduce the risk of a rupture of the housing 8.

The second area 822 preferably has a second width less than the first width of the first area 821. This allows formation of the sealed portion 8S with high adhesion strength while the inflow blocking function of the second area 822 is exhibited sufficiently. It is also possible to secure the weakly sealed portion of a size sufficient to allow reduction in ruptures of the housing 8.

When the first width is L1 [mm] and the second width is L2 [mm], L2/L1 is preferably from 0.1 to 0.8 approximately and more preferably from 0.2 to 0.7 approximately. This allows further improvement in the above effects.

The lithium ion secondary battery 1 as described above may be produced in accordance with, for example, a method of producing a secondary battery of the present invention.

### [1] Step of Preparing Sheet Material 80 and Electrode Laminate 10

### [1-1]

The sheet material 80 is prepared.

First, the resin layer 82 is formed on one side of the substrate layer 81 and the protective layer 83 is formed on the other side. The resin layer 82 and the protective layer 83 may be respectively formed by, for example, bonding a resin sheet formed from the above resin material to the substrate layer 81, extrusion molding the above resin material on the substrate layer 81, supplying a liquid containing the above resin material on the substrate layer 81 and then drying, or the like.

Examples of the method of supplying the liquid include spin coating, casting, microgravure coating, gravure coating, knife coating, bar coating, roll coating, wire-bar coating, dip coating, spray coating, and the like, and a single one of them or two or more in combination may be used.

### [1-2]

The electrode laminate 10 is also prepared.

First, a laminate is prepared that includes the cathode 2, the anode 3, and the separator 6 inserted between them.

The laminate may be prepared using, for example, I) a method including cutting the cathode 2, the anode 3, and the separator 6, each in a strip shape, into cell size in advance and then laminating them in order, or II) a method including continuously drawing the cathode 2, the anode 3, and the separator 6, each in a strip shape, from rolls wound with the cathode 2, the anode 3, and the separator 6 to laminate them in order and then dividing them into cell size.

Then, to the laminate thus obtained, the terminal tab 4 is joined at the cathode 2 and the anode 3 is joined at the terminal tab 5 by a method such as welding.

### [2] Step of Preparing Housing 8 including Opening

The sheet material 80 is then folded at the center in the longitudinal direction to place the surface on the resin layer 82 side inside.

The folded sheet material 80 (upper portion 80a and lower portion 80b) is then welded in the first area 821 at the left end and the right end to form the sealed portion 8S.

As illustrated in Fig. 4, the sealed portion 8S may be formed by heating, ultrasonic irradiation, or high frequency irradiation while pressurizing the sheet material 80 using, for example, a vacuum laminator, a roller, a vacuum packaging machine, or the like.

In this state, the sheet material 80 is formed in a bag shape provided with an opening.

### [3] Step of Storing Electrode Laminate 10 and Electrolyte Solution 7 in Housing 8

Then, via the opening, the electrode laminate 10 is stored in the housing 8 (sheet material 80 in a bag shape) and the housing 8 is filled with the electrolyte solution 7. In this step, the terminal tabs 4 and 5 are projected outside from the housing 8.

### [4] Step of Sealing Opening of Housing 8

Then, to seal the opening (remaining portion of the first area 821 of the sheet material 80) of the housing 8, the sealed portion 8S is formed in the same manner as above.

The lithium ion secondary battery 1 is obtained through the above steps.

The present invention is configured to block the first resin material melt during the welding of the first area 821 from flowing inside the housing 8 by the presence of the second area 822. It is thus possible to prevent formation of a resin ball (lump of resin) near the sealed portion 8S inside the housing 8.

If a resin ball is formed here, such a resin ball is brittle, and when gas is generated in the housing 8 to pull the sheet material 80, cracks are sometimes developed at the boundary with the resin ball of the resin layer 82. If the cracks thus developed reach the substrate layer 81, the metal constituting the substrate layer 81 is sometimes alloyed with lithium to form a hole in the substrate layer 81. In this case, the mechanical strength of the sheet material 80 decreases and the housing 8 may be easily broken due to the pressure of the gas generated in the housing 8.

In contrast, since the present invention does not cause formation of a resin ball inside the housing 8, the above inconvenience does not occur and it is possible to prevent a decrease in the mechanical strength of the housing 8 and to avoid unintended breakage.

It should be noted that the sheet material 80 may also have the second area 822 in a position outside of the first area 821, in a plan view, in addition to the position inside of the first area 821. This also allows prevention of the melt first resin material from flowing outside the sheet 80. It is thus possible to prevent formation of burrs (resin balls) outside the housing 8 and to omit the step of removing the burrs.

The area other than the first area 821 and the second area 822 of the resin layer 82 may be constituted by any resin material as long as it is thus possible to prevent the electrolyte solution 7 from contacting the substrate layer 81. This area is, however, preferably constituted by a resin material same as that of the first area 821 (first resin material) for preventing the production procedure of the sheet material 80 from being more complex and reducing the production costs.

### Second Embodiment

The second embodiment of the lithium ion secondary battery is then described.

The lithium ion secondary battery in the second embodiment is described below mainly in differences from the lithium ion secondary battery in the first embodiment and the description in the similar points is omitted.

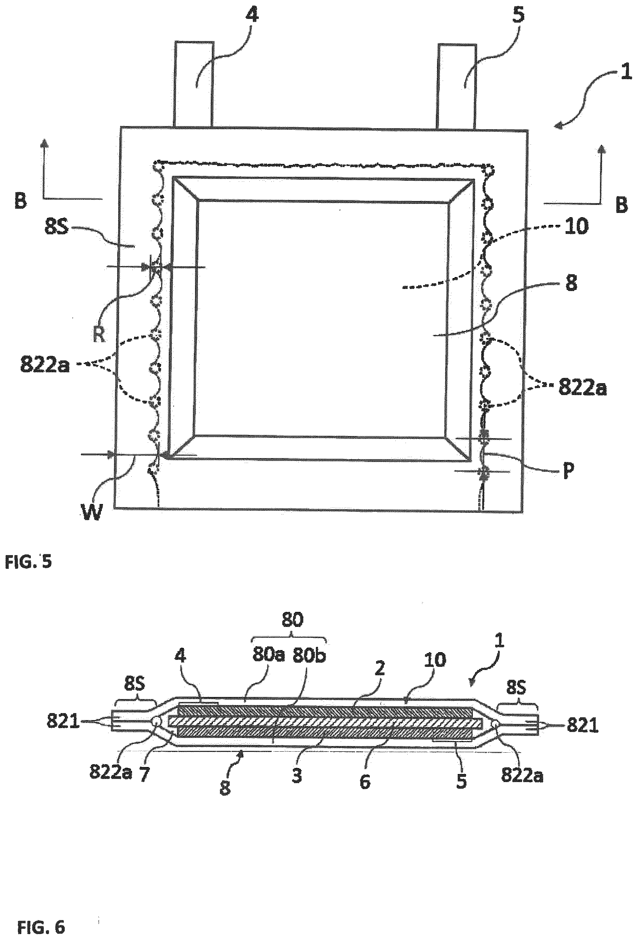

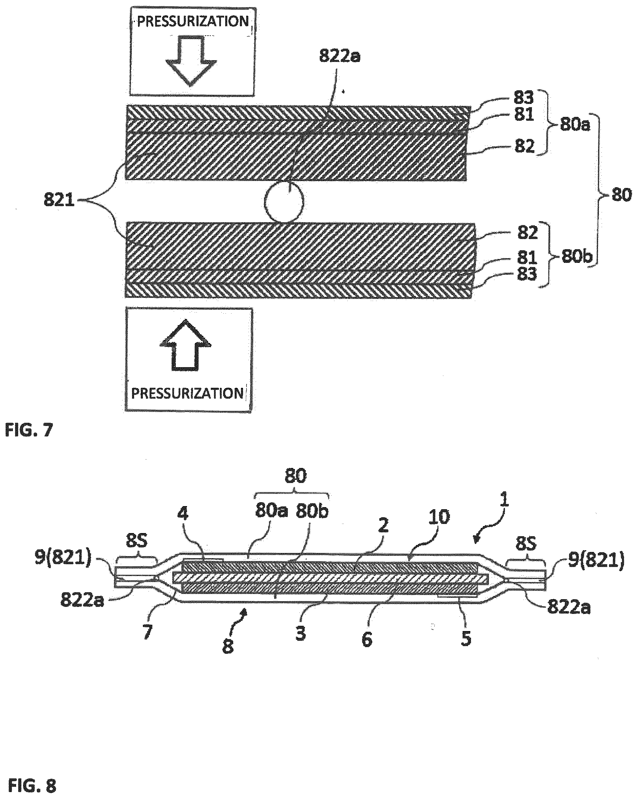

Fig. 5 is a cross-sectional view schematically illustrating the lithium ion secondary battery in the second embodiment, Fig. 6 is a cross-sectional view taken along line B-B in Fig. 5, and Fig. 7 is a cross-sectional view illustrating the step of preparing a housing of the lithium ion secondary battery illustrated in Fig. 5.

As illustrated in Figs. 5 and 6, a lithium ion secondary battery 1 in the second embodiment is same as the lithium ion secondary battery 1 in the first embodiment except for having a different second area 822 in the configuration and the arranged position.

In a sheet material 80 in the second embodiment, the second area 822 is constituted by a plurality of particles 822a and the particles 822a are arranged on a resin layer 82. The entire resin layer 82 is formed from the first resin material, and an area outside of the particles 822a constitutes a first area 821 to form a sealed portion 8S by welding.

Specifically, the particles 822a are in an approximately spherical shape, located inside of the first area 821, and provided along the first area 821 on the right and left. The particles 822a thus function as a barrier to the melt first resin material to block the melt first resin material from flowing inside the housing 8.

Accordingly, as illustrated in Fig. 5, the lithium ion secondary battery 1 thus produced has the sealed portion 8S partially obstructed by the particles 822a and partially located between two adjacent particles 822a in a plan view.

In this situation, when the resin layer 82 (first resin material) has a softening temperature of X [°C] and the particles 822a has a softening temperature of Y [°C], Y - X is preferably from 10 to 50 approximately and more preferably from 15 to 35 approximately. This allows formation of the sealed portion 8S with sufficient adhesion strength while deformation of the particles 822a is prevented to reliably exhibit the obstruction effect.

When the particles 822a have an average particle diameter (average value of particle diameters) of R [µm] and the first area 821 (sealed portion 8S) has an average width (average value of widths) of W [µm], the value of R/W may be appropriately set to secure sufficient adhesion strength of the sealed portion 8S and also more reliably block the melt first resin material from flowing inside the housing 8.

Specifically, the particles 822a preferably has an average particle diameter R from 10 to 100 µm approximately and more preferably from 15 to 50 µm approximately.

The first area 821 preferably has an average width W from 1 to 15 µm approximately and more preferably from 3 to 10 µm approximately.

In the present embodiment, the particles 822a are provided at approximately regular intervals. This allows equalization of the amounts of the first resin material in a molten state flowing into each space between the particles 822a. It is thus possible to more reliably block the melt first resin material from flowing inside the housing 8.

The particles 822a preferably has an average interval (average value of intervals) P, but not particularly limited to, from 2 to 50 µm approximately and more preferably from 5 to 30 µm approximately. This allows further improvement in the above effects.

Such particles 822a are preferably constituted by a material highly adhesive to the first area 821 (sealed portion 8S). Examples of such a material include acrylic resins such as acrylonitrile copolymers, polyamide-based resins, and the like, and a single one of them or two or more in combination may be used.

It should be noted that the particles 822a preferably has a thermal expansion coefficient set to be greater than the thermal expansion coefficient of the sealed portion 8S (first area 821).

One of the reasons for the rupture of the housing 8 due to the internal pressure increase as described earlier is that the adhesion strength of the welded portion (sealed portion) of the sheet material 80 is extremely high.

To cope with this, setting of the thermal expansion coefficient of the particles 822a to be greater than the thermal expansion coefficient of the sealed portion 8S (first area 821) allows configuration in which the sealed portion 8S is broken before the internal pressure of the housing 8 becomes higher than necessary to form a passage in communication with inside and outside of the housing 8.

Specifically, when the lithium ion battery 1 generates excessive heat, the particles 822a thermally expand and the volume increases. The particles 822a with the increased volume press separate the upper portion 80a and the lower portion 80b away from each other, and the adhesion strength of the sealed portion 8S decreases. The pressing force of the increased internal pressure is applied here to break the sealed portion 8S and open the housing 8.

In particular, each particle 822a is located near the interface between the welded resin layers 82 and thus allows the pressing force due to the thermal expansion of the particles 822a and the pressing force due to the internal pressure of the housing 8 to be efficiently used for separation of the interface between the resin layers 82 (breakage of the sealed portion 8S).

Although a mechanism to discharge the gas generated in the housing 8 may be configured by providing the housing 8 with a gas discharge valve, it is preferred to be configured by the particles 822a. Such configuration secures high airtightness of the housing 8 by the sheet material 80 and the sealed portion 8S. It is thus possible to sufficiently block entrance of water into the housing 8, which causes a problem when the gas discharge valve is provided, and to reliably prevent degradation of the electrode laminate 10 during normal use.

While each particle 822a may be hollow or solid, it is preferably hollow. The hollow particles 822a contain a gas and thus allow even greater volume change due to the thermal expansion.

Examples of such a gas include air, low molecular weight hydrocarbons (low boiling hydrocarbons) such as ethane, ethylene, propane, propene, n-butane, isobutane, butene, isobutene, n-pentane, isopentane, neopentane, n-hexane, heptane, and petroleum ether, chlorofluorocarbons such as CCl₃F, CCl₂F₂, and CClF₃, tetraalkylsilanes such as tetramethylsilane, trimethylethylsilane, and trimethylisopropylsilane, and the like.

Moreover, the hollow particles 822a may contain at least one of substances such as, for example, a fire extinguisher and a water absorbing polymer. When the hollow particles 822a thermally expand and break (rupture) the form, such a substance may be released in the passage formed in the sealed portion 8S.

For example, if a fire extinguisher is released, it is possible to prevent ignition of the lithium ion secondary battery 1 from occurring. If a water absorbing polymer is released, the electrolyte solution 7 is absorbed by the water absorbing polymer and it is thus possible to prevent the electrolyte solution 7 from flowing outside the lithium ion secondary battery 1 (housing 8).

The lithium ion secondary battery 1 in the second embodiment may be produced in a similar manner to the lithium ion secondary battery 1 in the first embodiment by preparing the sheet material 80 including the particles 822a at step [1-1] above and welding the first area 821 as illustrated in Fig. 7.

Such a sheet material 80 including the particles 822a is produced by preparing a rectangular sheet material 80 and arranging the particles 822a in predetermined positions of two longitudinal sides on one side (resin layer 82) of the sheet material 80.

The particles 822a may be arranged by ejecting, for example, a liquid agent containing the particles 822a from, for example, a droplet ejection nozzle, a dispenser, or the like and supplying on the resin layer 82, followed by drying or by bonding release paper with the particles 822a arranged in predetermined positions for transfer.

It should be noted that the sealed portion 8S may be configured as illustrated in Fig. 8. The sealed portion 8S illustrated in Fig. 8 is formed by placing an adhesive sheet 9 (first area 821) outside the particles 822a (second area 822) and between the upper portion 80a and the lower portion 80b and welding the welded sheet 9 and the two resin layers 82. Such a welded sheet 9 is preferably constituted by the material same as that for the resin layer 82.

In such a lithium ion secondary battery 1 in the second embodiment as well, the same action and effects as the lithium ion secondary battery 1 in the first embodiment are obtained.

The particles 822a may also be arranged at the opening (upper end) of the housing 8 to weld the first area 821.

In addition, the particles 822a may contact each other.

Moreover, the second area 822 may be constituted by, instead of the particles 822a, in a strip shape or in a linear shape continuously extending along the first area 821.

While the lithium ion secondary battery 1 in each embodiment described above is configured to include the one electrode laminate 10, the battery 1 may be configured to include a plurality of laminated electrode laminates 10 or configured to include an electrode laminate 10 in a strip shape wound to locate the cathode 2 inside.

While the housing 8 in each embodiment above is prepared by folding the one sheet material 80, the housing 8 may be prepared by laminating another sheet material on the surface on the side of the first area 821 and the second area 822 of the sheet material 80, followed by welding the first area 821 over the entire periphery.

As the electrolyte, it is also possible to use a solid electrolyte instead of the electrolyte solution 7.

The second area 822 may be constituted by, for example, a ceramic material instead of the resin material.

The sheet material 80 may be provided with one or more layers for an arbitrary purpose (e.g., improvement of adhesion) between the substrate layer 81 and the resin layer 82 and between the substrate layer 81 and the protective layer 83.

Although the sheet material, the secondary battery, and the method of producing a secondary battery of the present invention have been described above, the present invention is not limited to the above description.

The secondary battery of the present invention is also applicable to, in addition to lithium ion secondary batteries, secondary batteries such as, for example, silver ion secondary batteries.

In addition, the sheet material and the secondary battery of the present invention may respectively have other arbitrary configurations and may be substituted by arbitrary configurations exhibiting equivalent functions, and the method of producing a secondary battery of the present invention may have one or more steps for an arbitrary purpose.

Moreover, in the present invention, any arbitrary configuration in the first and second embodiments may be combined.

### Reference Signs List

- 1: Lithium Ion Secondary Battery
- 10: Electrode Laminate
- 2: Cathode
- 3: Anode
- 4, 5: Terminal Tab
- 6: Separator
- 7: Electrolyte Solution
- 8: Housing
- 80: Sheet Material
- 80a: Upper Portion
- 80b: Lower Portion
- 81: Substrate Layer
- 82: Resin Layer
- 821: First Area
- 822: Second Area
- 822a: Particle
- 83: Protective Layer
- 8S: Sealed Portion
- 9: Welded Sheet

## Claims

1. A sheet material for preparing a housing to enclose an electrode laminate inside, the electrode laminate including a cathode, an anode, and a separator, the sheet material comprising:
a first area constituted by a resin material and configured to be welded during preparation of the housing; and
a second area located inside of the first area in a plan view of the sheet material and configured to block the resin material melt during preparation of the housing from flowing inside the housing.

2. The sheet material according to Claim 1, wherein the second area is constituted by a resin material having a melt flow rate less than that of the resin material for the first area.

3. The sheet material according to Claim 2, wherein, when the resin material constituting the first area has a melt flow rate at a temperature of 200°C under a load of 98 N of F1 [g/10 min] and the resin material constituting the second area has a melt flow rate at a temperature of 200°C under a load of 98 N of F2 [g/10 min], F1/F2 is from 1.5 to 3.5.

4. The sheet material according to any one of Claims 1 through 3, wherein the second area is constituted by a resin material having a density greater than that of the resin material for the first area.

5. The sheet material according to Claim 4, wherein, when the resin material constituting the first area has a density of D1 [g/cm³] and the resin material constituting the second area has a density of D2 [g/cm³], D2 - D1 is 0.015 or less.

6. The sheet material according to any one of Claims 1 through 5, wherein the second area is constituted by a resin material having a melting point higher than that of the resin material for the first area.

7. The sheet material according to Claim 6, wherein, when the resin material constituting the first area has a melting point of M1 [°C] and the resin material constituting the second area has a melting point of M2, M1 - M2 is from 10 to 30.

8. The sheet material according to any one of Claims 1 through 7, wherein
the sheet material has a substrate layer and a surface layer provided on one side of the substrate layer, and
both the first area and the second area are provided in the surface layer.

9. The sheet material according to Claim 8, wherein, in a plan view of the sheet material, the first area is in a strip shape having a first width and the second area is in a strip shape having a second width less than the first width.

10. The sheet material according to Claim 9, wherein, when the first width is L1 [mm] and the second width is L2 [mm], L2/L1 is from 0.1 to 0.8.

11. The sheet material according to any one of Claims 1 through 7, wherein
the sheet material has a substrate layer and a surface layer provided on one side of the substrate layer, and
the first area is provided in the surface layer and the second area is provided on the surface layer.

12. The sheet material according to Claim 11, wherein the entire surface layer is formed from the resin material constituting the first area.

13. The sheet material according to Claim 11 or 12, wherein the second area contains a plurality of particles.

14. A secondary battery comprising:
an electrode laminate including a cathode, an anode, and a separator;
an electrolyte; and
a housing configured by welding the first area of the sheet material according to any one of Claims 1 through 13 and configured to enclose the electrode laminate and the electrolyte inside.

15. A method of producing a secondary battery, comprising the steps of:
preparing the sheet material according to any one of Claims 1 through 13 and an electrode laminate including a cathode, an anode, and a separator;
preparing a housing including an opening by folding the prepared sheet material with a surface on a side of the first area and the second area inside or overlapping another sheet material on the surface of the prepared sheet material, followed by welding a portion of the first area of the prepared sheet material;
via the opening, storing the electrode laminate in the housing and filling the housing with an electrolyte; and
sealing the opening of the housing by welding the remaining portion of the first area of the prepared sheet material, wherein
the resin material melt during the welding of the first area is blocked from flowing inside the housing by the presence of the second area.
